# EUROPEAN PATENT SPECIFICATION

(11) **EP 2 443 374 B1**
(45) Date of publication and mention of the grant of the patent: **20.05.2015**
(21) Application number: 10725252.0
(22) Date of filing: 14.06.2010
(51) Int. Cl.: F16L 37/092, F16L 37/091

(54) **PUSH-FIT PIPE FITTING SYSTEM WITH SUPPORT SLEEVE**
STECKROHRVERBINDUNGSYSTEM MIT TÜLLENGEHÄUSE
SYSTÈME DE RACCORD INSTANTANÉ POUR TUYAUTERIE DOTÉ D'UN MANCHON DE SUPPORT

(30) Priority: 15.06.2009 GB 0910379
(43) Date of publication of application: 25.04.2012
(73) Proprietor: Wavin B.V., 8011 CW Zwolle (NL)
(72) Inventor: BRISTOW, Adrian, David, North Yorkshire DN14 9PH (GB); BROOKMAN, Geert, NL-9491 AD Zeijen (NL); SUTCLIFFE, Steven, West Yorkshire WF2 0JZ (GB); FISHER, Raymond, South Yorkshire DN5 8TB (GB); FARDON, Mark, Notts NG20 9PP (GB)
(74) Representative: Mounteney, Simon James
(86) International application number: PCT/GB2010/001153
(87) International publication number: WO 2010/146337

(56) References cited:
- WO-A1-92/20949
- DE-A1- 19 702 289
- JP-A- H0 771 680
- US-A- 3 030 130

## Description

The present invention relates to a push-fit pipe fitting system with a support sleeve and particularly, but not exclusively, to a system for use for example in plumbing applications for connecting water pipes. The invention also relates to components for use in such a system.

Push-fit pipe fitting systems typically comprise couplings and other components that are each provided with at least one tubular body portion having a bore for receiving and coupling with an end portion of a pipe. Such a tubular body portion typically houses a sealing ring and a gripping means for resisting or preventing the withdrawal of the pipe once it has been pushed into the bore.

In practice, the gripping means typically comprises a grab ring or other toothed structure which has inclined teeth that readily allow the insertion of a pipe into the bore, but resist withdrawal of the pipe from the bore under axial loading by ultimately biting into the radially outer surface of the pipe as a withdrawing force is experienced. The specific mechanisms used to enable the operation of the gripping means are numerous.

Many push-fit pipe fitting systems also make use of support sleeves when used with plastics pipe. In practice, the support sleeve is fitted into the end of the pipe in order to provide a known and consistent pipe end condition. In addition, the support sleeve serves to re-round the pipe to given dimensions, so as to remove defects (such as transverse deformation) arising from coiling and/or cutting. A further benefit of a support sleeve is that it can provide support to the sealing ring and/or gripping means during service.

One problem experienced with known support sleeves is that they can be stripped out of the pipe end by the seal ring or gripping means during withdrawal of the pipe from the fitting. At best this means that the installer has the inconvenience of dismantling the fitting to recover the sleeve. If this does not work or it is not possible (e.g. because the fitting is of a non-demountable type), then there is a risk of damaging the sealing ring and/or gripping means - particularly if the sleeve is removed with a tool, such as a pair of pliers.

One known solution to the above problem is to provide a rigid, annular barb located towards the 'nose' portion of the support sleeve. Unfortunately, this type of structure suffers from the disadvantage that it causes a local increase of the outside diameter of the pipe and it can also be difficult to insert into the pipe.

DE 197 02 289 A1 discloses a fitting that has a support with an axial passage opening to be plugged onto the end of the pipe and held in place by a barbed or catch-fitted outer clamp ring and/or at least a similarly equipped inner clamp ring.

JP H7 71680 A also discloses a ring/insert for a hose.

The present invention sets out to provide a push-fit pipe fitting system that offers the benefits of a support sleeve, but without the above described disadvantages associated with the prior art.

According to a first aspect of the invention there is provided a support sleeve of a pipe fitting system, the said support sleeve comprising a nose portion for capping an end portion of a pipe and a body portion for location within the pipe, the said body portion being provided with at least one tongue extending both radially outwardly and axially towards the said nose portion, the said tongue having a distal end portion with an arcuate profile.

Such a support sleeve can be used in a push-fit pipe fitting system without any deformation of the outside diameter of the pipe during use, due to the inherent flexibility of the tongue. Insertion of the support sleeve into the pipe is also relatively easy and no modification of existing jointing practices is required. The arcuate profile of the tongue has been found to provide particularly good retention of the tongue within the pipe, whilst facilitating manufacture.

The support sleeve may comprise a plurality of said tongues. These tongues may be arranged at a common axial position along the length of the body portion and a pair of them may be diametrically opposed.

The body portion may be generally cylindrical and the or each tongue may have a transverse width that is 50% or less of the outside diameter thereof. Preferably, the transverse width of the or each tongue is from 15-35% of the outer circumference of the body portion.

The length of the or each tongue may be from 10% to 30% of the length of the body portion. Preferably, the length of the or each tongue is 15% of the length of the body portion. The or each tongue may have a length that is substantially equal to its width.

When in an as-manufactured condition, the or each tongue may project from the body portion at an angle of from 10 degrees to 30 degrees to the axis of the body portion. Preferably, when in an as-manufactured condition, each tongue projects from the body portion by 0.5 to 1mm in a radial direction. The sum total component of the maximum diametric extension of the body potion that is contributed by the radial projection of the tongue or tongues may be substantially 1 mm.

The or each tongue may have a distal end portion with a part-circular, part-elliptical, part-parabolic or part-hyperbolic profile.

The said support sleeve may be made from stainless steel.

A second aspect of the invention provides a push-fit pipe fitting system comprising: a fitting having a first body portion defining a bore for receiving a pipe, the said bore being provided with gripping means for retaining the pipe within the bore; a seal for effecting a seal between the pipe and the fitting; and a support sleeve as set out above.

Embodiments of the invention will now be described by way of example and with reference to the accompanying drawings in which:-
Figure 1 is a partial section through a joint using a pipe fitting in accordance with the invention;
Figure 2 is a side view of the support sleeve of the fitting of Figure 1; and
Figure 3 is a view of the support sleeve of Figure 2, rotated 90° about its longitudinal axis; and
Figure 4 is a partial section through a pipe joint using an alternative pipe fitting in accordance with the invention.

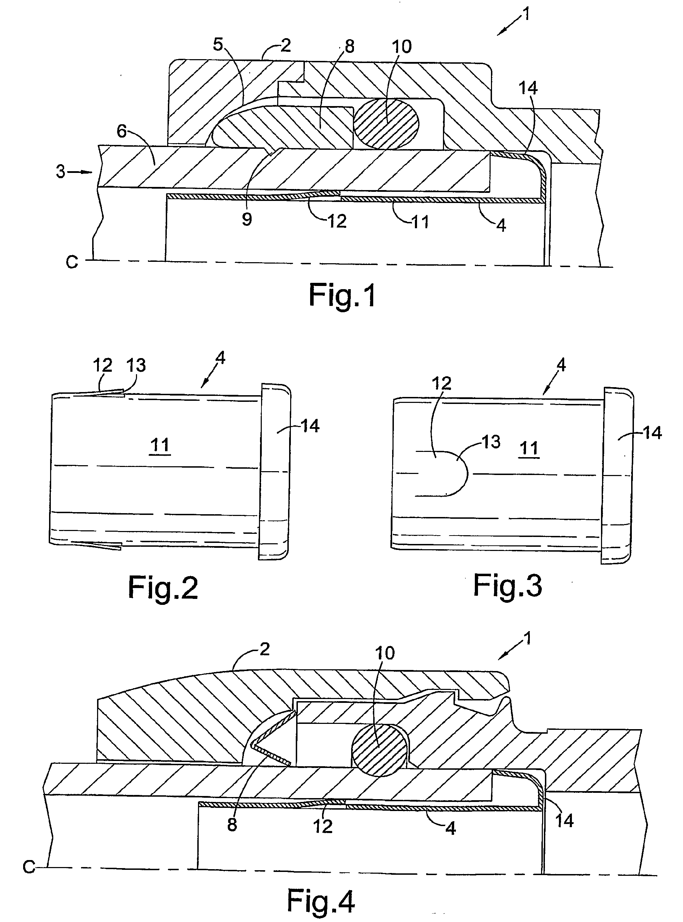

Figure 1 shows a joint assembly 1 forming a part of a push-fit pipe fitting system in accordance with a first embodiment of the invention. It will be seen that the illustrated joint assembly comprises a socket defined by a body portion 2 which comprises a bore 3 for receiving the end of a pipe 6. The body portion 2 can be formed from a wide variety of materials, including various plastics (such as polybutylene) and brass.

Figure 1 (along with all other figures of the specification) is somewhat schematic in that the body portion 2 is merely part of a fitting, the remainder of which is not shown. The remainder of the fitting can have an almost infinite variety of overall shapes and configurations, both in terms of its function and its appearance. For example, the fitting could be a simple coupling, for joining two lengths of pipe together; a more complex joint, such as an elbow; or something more complex, such as a T-junction, a manifold or a valve. Some of these fittings will include other socket-defining body portions and these need not necessarily have a similar structure to the illustrated body portion. In addition, the pipe can be part of a length of piping or a pipe-shaped spigot forming part of another fitting. The non-illustrated parts of the fitting will not be discussed further.

The body portion 2 further comprises gripping means 8 in the form of a grab wedge, and a seal 10, both of which are annular and coaxially accommodated within the bore 3. The seal 10 is adapted to accommodate the pipe 6 and seal between its radially outer surface and a radially inner surface of the bore 3 when the pipe 6 is fully received within the bore 3. The gripping means 8 has inwardly directed teeth 9 located upon axially extending arms that are adapted to flex as the pipe 6 is inserted into the bore, thereby permitting its insertion. The inclination of the teeth 9 is, however, such as to resist removal of the pipe 6 from the bore 3 after insertion. The resistance of the teeth 9 to the withdrawal of the pipe 6 increases during axial loading of the type experienced when the system is pressurized, because the gripping means is in that case axially displaced towards the fitting mouth, whereupon radial contraction of the arms is caused by their camming against a radially inwardly directed, sloping surface 5 of the body portion.

The fitting described herein is illustrative, and aims to provide context for the invention. In particular, the specific shape and configuration of the body portion 2, gripping means 8 and seal 10 are not limiting upon the invention and a wide variety of alternative shapes and configurations could be used instead, an example of which is shown in Figure 4. In view of this, the precise details of the fitting will not be discussed further except where relevant to the operation of the invention.

The pipe 6 is provided with a support sleeve 4 in order to provide a known and consistent pipe end condition. The support sleeve comprises a cylindrical body portion 11 provided with a nose portion 14. In conventional fashion, the body portion 11 is configured to locate within an end region of the pipe and the nose portion 14 fits over the end of the pipe. In addition, the support sleeve 4 serves to re-round the pipe to given dimensions, so as to remove defects (such as transverse deformation) arising from coiling and/or cutting. A further benefit of a support sleeve 4 is that it provides support to the seal 10 and gripping means 8 during service. To that end, the length of the body portion is adjusted to that of the fitting, in that it extends beyond the seal 10 and gripping means 8 in mounted condition.

The illustrated joint is formed in a generally conventional manner by inserting the support sleeve 4 into the end region of the pipe 6, and then inserting the pipe 6 into the bore 3 until it can proceed no further. By this stage, the teeth 9 engage the radially outer surface of the pipe 6 and the sealing ring 10 effects a seal between the pipe 6 and the bore 3.

The pipe 6 is removed from the fitting by disengaging the teeth 9 from the outer surface of the pipe 6. In this case, a tool is used for the purpose, but other types of fitting use different methods, including the action of a collet housed within the fitting and disassembly, and the invention is equally applicable to these.

The body portion 11 of the support sleeve 4 further includes a pair of radially outwardly extending tongues 12 that also extend axially towards the nose 14 of the support sleeve 4, for instance in a sloping fashion as illustrated.

The tongues 12 each take the form of a relatively short projection punched from the body portion 11. Each tongue 12 has a semi-circular distal end portion 13.

In alternative embodiments of the invention, the distal end portion 13 may be only part-circular. Furthermore other arcuate profiles are possible, including (but not limited to): part-elliptical, part-parabolic or part-hyperbolic. Suitable arcuate profiles need not necessarily be symmetrical. Embodiments of the invention also include asymmetric profiles, as well as profiles that are generally arcuate, but have regular and/or irregular interruptions, such as flat portions or grooves, for example. Furthermore, although the tongues of this example have the same profile, the invention also includes embodiments in which tongues may have respectively. different profiles.

Although the illustrated embodiment shows two diametrically opposed tongues 12, the invention also includes embodiments having different numbers of tongues, which can be arranged at regular or irregular intervals around the circumference of the body portion 11. In addition, although the tongues 12 in the illustrated embodiment are shown at a common axial position on the body portion 11, it is within the scope of the invention for the tongues to be provided at axial positions that are different from each other.

As the support sleeve 4 is pushed into the pipe 6, the tongues 12 close slightly towards the axis C of the support sleeve 4. In their latent position, the tongues 12 do not necessarily serve an immediate purpose, although they may serve to prevent the support sleeve 4 from falling out of a relatively larger internal diameter pipe 6. In general, the tongues 12 serve their primary purpose when the pipe 6 is removed from the fitting body portion 2. At this time, the arcuate distal end portions 13 of the tongues 12 interfere with the radially inner surface of the pipe 6, providing enough resistance to prevent the support sleeve 4 from being removed from the pipe 6 by the O ring 10, the gripping mechanism 8, or any other internal components.

In use, the shape and configuration of the tongues 12 are such as to allow the support sleeve 4 to be pushed into the bore of the pipe 6 with a relatively low force. Because the tongues 12 only interfere with the radially inner surface of the pipe 6 at their respective local positions and due to their inherent flexibility, the outside diameter of the pipe 6 is not significantly increased.

In this particular embodiment, the axial location of the tongues 12 upon the body portion 2 of the pipe fitting 4 is such as to avoid them being located in the same radial plane as either the O ring 10 or the teeth 9, when the support sleeve 4 is inserted within the pipe 6. This avoids any adverse effect upon the operation of either component. More specifically, they are located in a radial plane situated between the seal ring 10 and teeth 9, as shown. In alternative embodiments, they may be located in a radial plane located in front of the teeth 9 or behind the seal ring 10, as seen in insert direction.

In the present case, the transverse width of each tongue 12 is about 20% of the outer circumference of the body portion 11 of the support sleeve 4. Generally speaking, it is preferable for the width of the tongue 12 to be no more than 50% of the outside diameter of the body portion 11, although this is not essential.

In this embodiment, the length of each tongue is 25% of the length of the body portion 11 of the support sleeve 4. In other embodiments it is preferred that the length of the tongue 12 is in the range of 10-30% of the length of the cylindrical body portion 11.

The preferred length for any given tongue 12 may depend, to a certain extent upon its transverse width, as well as the thickness and other physical characteristics of the material from which the support sleeve 4 is made. This is because the tongues must provide sufficient resistance to the withdrawal of the support sleeve 4 from the pipe 6, yet still allow for relatively easy insertion of the sleeve 4 within the pipe 6. The maximum length is limited by strength requirements of the support sleeve. In a preferred embodiment, the length is about equal to the width of the tongue. This provides for ease of manufacture.

The angle at which the tongues 12 project from the body portion 11 of the support sleeve 4 also has a bearing upon the operational characteristics of the support sleeve 4 -particularly, the ease of insertion and resistance to withdrawal. In the present case, the angle is 20 degrees, although a range of from 10 degrees to 30 degrees will still provide a good degree of resistance to withdrawal whilst still allowing easy insertion.

Each tongue 12 projects radially by about 0.5mm. By virtue of their radial projection, the tongues 12 define the maximum diametric extension of the body portion 11. As each tongue 12 projects by a respective 0.5mm, the sum total component of the maximum diametric extension of the body portion 11 that is contributed by the tongues is 1mm. It has been found that a sum total component of about 1mm is preferable (although not essential), irrespective of the number of tongues and their location upon the circumference. Hence, in an embodiment having only a single tongue, it is beneficial for this tongue to have a radial projection of 1mm. The reason for this that this sum total component tends to be sufficient to bridge the tolerance on the internal diameter of the pipe, without having a negative impact upon insertion force.

As the profile of the distal ends of the tongues 12 directly determines their contact area with the radially inner surface of the pipe 6, this will also influence other proportions of the tongue 12.

In the present embodiment, the support sleeve 4 is formed of RVS (= stainless steel) 316 or 304.

In such a case, it is found that the following configuration is particularly preferable:

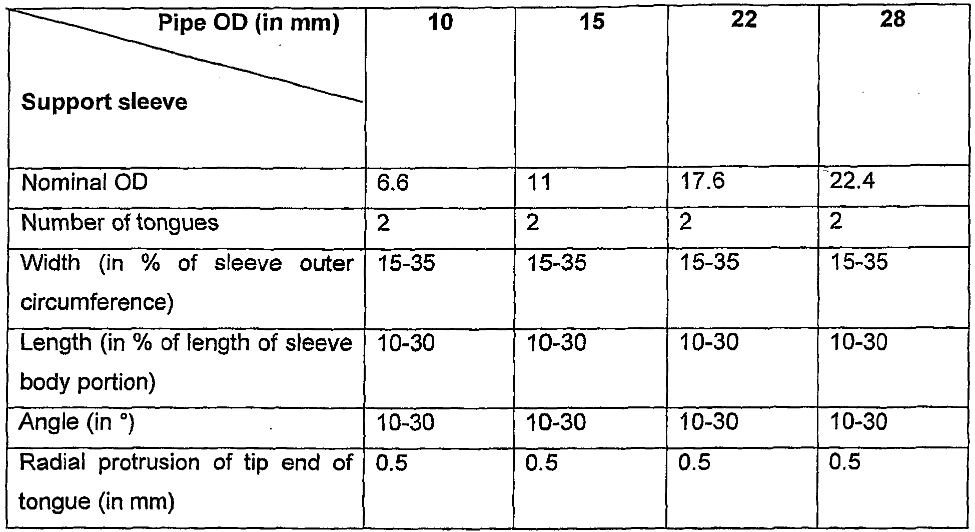

The above-described embodiment of the invention provides a number of advantages, in that it can be manufactured from stainless steel, so as to provide a durable, high-strength component, yet still offer the desired ease of insertion and resistance to withdrawal. In addition, it is relatively easy and cost effective to manufacture and maintains compatibility with a wide range of existing fittings. An arcuate tip on the tongues 12 is also less likely to cause injury and/or get tangled with other components than a sharper tongue-profile. Furthermore, it has been found that an arcuate tongue profile provides a particularly effective interference fit between the support sleeve 4 and the pipe 6 during use.

Many further variations and modifications will suggest themselves to those versed in the art upon making reference to the above description which is given by way of example only and which is not intended to limit the scope of the invention, that being determined by the appended claims.

## Claims

1. A support sleeve (4) of a pipe fitting system, said support sleeve comprising a nose portion (14) for capping an end portion of a pipe and a body portion (11) for location within the pipe (6), the said body portion (11) being provided with at least one tongue (12) extending both radially outwardly and axially towards the said nose (14) portion, **characterized in that** said tongue (12) has a distal end portion (13) with an arcuate profile.

2. A support sleeve according to Claim 1, comprising a plurality of said tongues (12).

3. A support sleeve according to Claim 2, wherein the said tongues (12) are arranged at a common axial position along the length of the body portion.

4. A support sleeve according to Claim 2 or 3, wherein a pair of said tongues (12) is diametrically opposed.

5. A support sleeve according to any preceding claim, wherein the body portion (11) is generally cylindrical and the or each tongue (12) has a transverse width that is 50% or less than the outside diameter thereof.

6. A support sleeve according to Claim 5, wherein the transverse width of the or each tongue (12) is from 15-35% of the outer circumference of the body portion (11).

7. A support sleeve according to claim 6, wherein the transverse width of the or each tongue (12) is 20% of the outer circumference of the body portion (11).

8. A support sleeve according to any preceding claim, wherein the length of the or each tongue (12) is from 10% to 30% of the length of the body portion (11).

9. A support sleeve according to Claim 8, wherein the length of the or each tongue (12) is 15% of the length of the body portion (11).

10. A support sleeve according to any preceding claim, wherein, when in an as-manufactured condition, the or each tongue (12) projects from the body portion (11) at an angle of from 10 degrees to 30 degrees to the axis of the body portion (11).

11. A support sleeve according to any preceding claim, wherein, when in an as-manufactured condition, the or each tongue (12) projects from the body portion (11) by 0.5 to 1 mm in a radial direction.

12. A support sleeve according to any one of the preceding claims, wherein, when in an as-manufactured condition, the sum total component of the maximum diametric extension of the body portion that is contributed by the radial projection of the tongue (12) or tongues is substantially 1mm.

13. A support sleeve according to any preceding claim wherein the or each tongue (12) has a distal end portion (13) with a part-circular, part-elliptical, part-parabolic or part-hyperbolic profile.

14. A support sleeve according to any preceding claim, wherein the tongues (12) are made from a resilient material.

15. A support sleeve according at any preceding claim, wherein the said support sleeve (4) is made from stainless steel.

16. A push-fit pipe fitting system comprising:
a fitting having a first body portion (2) defining a bore (3) for receiving a pipe (6), the said bore (3) being provided with gripping means (8) for retaining the pipe (6) within the bore (3);
a seal (10) for effecting a seal between the pipe (6) and the fitting; and a support sleeve (4) according to any preceding claim.

## Patentansprüche

1. Stützhülse (4) eines Rohrverbindungssystems, wobei die Stützhülse einen Ansatzabschnitt (14) für das Abdecken eines Endabschnittes eines Rohres und einen Gehäuseabschnitt (11) für das Anordnen innerhalb des Rohres (6) aufweist, wobei der Gehäuseabschnitt (11) mit mindestens einer Zunge (12) versehen ist, die sich sowohl radial nach außen als auch axial in Richtung des Ansatzabschnittes (14) erstreckt, **dadurch gekennzeichnet, dass** die Zunge (12) einen distalen Endabschnitt (13) mit einem bogenartigen Profil aufweist.

2. Stützhülse nach Anspruch 1, die eine Vielzahl der Zungen (12) aufweist.

3. Stützhülse nach Anspruch 2, bei der die Zungen (12) in einer gemeinsamen axialen Position entlang der Länge des Gehäuseabschnittes angeordnet sind.

4. Stützhülse nach Anspruch 2 oder 3, bei der ein Paar der Zungen (12) diametral gegenüberliegend ist.

5. Stützhülse nach einem der vorhergehenden Ansprüche, bei der der Gehäuseabschnitt (11) im Allgemeinen zylindrisch ist und die oder jede Zunge (12) eine Breite in der Querrichtung aufweist, die 50 % oder weniger beträgt als deren Außendurchmesser.

6. Stützhülse nach Anspruch 5, bei der die Breite in der Querrichtung der oder jeder Zunge (12) von 15 bis 35 % des äußeren Umfangs des Gehäuseabschnittes (11) beträgt.

7. Stützhülse nach Anspruch 6, bei der die Breite in der Querrichtung der oder jeder Zunge (12) 20 % des äußeren Umfangs des Gehäuseabschnittes (11) beträgt.

8. Stützhülse nach einem der vorhergehenden Ansprüche, bei der die Länge der oder einer jeden Zunge (12) von 10 % bis 30 % der Länge des Gehäuseabschnittes (11) beträgt.

9. Stützhülse nach Anspruch 8, bei der die Länge der oder einer jeden Zunge (12) 15 % der Länge des Gehäuseabschnittes (11) beträgt.

10. Stützhülse nach einem der vorhergehenden Ansprüche, bei der, wenn sie sich in einem hergestellten Zustand befindet, die oder jede Zunge (12) aus dem Gehäuseabschnitt (11) unter einem Winkel von 10 Grad bis 30 Grad zur Achse des Gehäuseabschnittes (11) vorsteht.

11. Stützhülse nach einem der vorhergehenden Ansprüche, bei der, wenn sie sich in einem hergestellten Zustand befindet, die oder jede Zunge (12) aus dem Gehäuseabschnitt (11) um 0,5 bis 1 mm in einer radialen Richtung vorsteht.

12. Stützhülse nach einem der vorhergehenden Ansprüche, bei der, wenn sie sich in einem hergestellten Zustand befindet, die Gesamtsummenkomponente der maximalen Durchmesserverlängerung des Gehäuseabschnittes, zu der der radiale Vorsprung der Zunge (12) oder der Zungen beiträgt, im Wesentlichen 1 mm beträgt.

13. Stützhülse nach einem der vorhergehenden Ansprüche, bei der die oder jede Zunge (12) einen distalen Endabschnitt (13) mit einem teilkreisförmigen, teilelliptischen, teilparabolischen oder teilhyperbolischen Profil aufweist.

14. Stützhülse nach einem der vorhergehenden Ansprüche, bei der die Zungen (12) aus einem elastischen Material hergestellt werden.

15. Stützhülse nach einem der vorhergehenden Ansprüche, wobei die Stützhülse (4) aus nichtrostendem Stahl hergestellt wird.

16. Steckrohrverbindungssystem, das aufweist:
ein Formstück mit einem ersten Gehäuseabschnitt (2), der ein Bohrloch (3) für das Aufnehmen eines Rohres (6) definiert, wobei das Bohrloch (3) mit einem Greifmittel (8) für das Halten des Rohres (6) innerhalb des Bohrloches (3) versehen ist;
eine Dichtung (10) für das Bewirken einer Abdichtung zwischen dem Rohr (6) und dem Formstück; und eine Stützhülse (4) nach einem der vorhergehenden Ansprüche.

## Revendications

1. Manchon de support (4) d'un système de raccord de tuyauterie, ledit manchon de support comprenant une partie de nez (14) pour recouvrir une partie d'extrémité d'un tuyau, et une partie de corps (11) destinée à être agencée dans le tuyau (6), ladite partie de corps (11) comportant au moins une languette (12) s'étendant radialement vers l'extérieur et axialement vers ladite parte de nez (14), **caractérisé en ce que** ladite languette (12) comporte une partie d'extrémité distale (13) avec un profil arqué.

2. Manchon de support selon la revendication 1, comprenant plusieurs desdites languettes (12).

3. Manchon de support selon la revendication 2, dans lequel lesdites languettes (12) sont agencées au niveau d'une position axiale commune le long de la longueur de la partie de corps.

4. Manchon de support selon les revendications 2 ou 3, dans lequel une paire desdites languettes (12) est diamétralement opposée.

5. Manchon de support selon l'une quelconque des revendications précédentes, dans lequel la partie de corps (11) est généralement cylindrique, la ou chaque languette (12) ayant une largeur transversale représentant 50% ou moins du diamètre extérieur de celle-ci.

6. Manchon de support selon la revendication 5, dans lequel la largeur transversale de la ou de chaque languette (12) représente 15 à 35% de la circonférence externe de la partie de corps (11).

7. Manchon de support selon la revendication 6, dans lequel la largeur transversale de la ou de chaque languette (12) représente 20% de la circonférence externe de la partie de corps (11).

8. Manchon de support selon l'une quelconque des revendications précédentes, dans lequel la longueur de la ou de chaque languette (12) représente 10% à 30% de la longueur de la partie de corps (11).

9. Manchon de support selon la revendication 8, dans lequel la longueur de la ou de chaque languette (12) représente 15% de la longueur de la partie de corps (11).

10. Manchon de support selon l'une quelconque des revendications précédentes, dans lequel, dans un état brut de fabrication, la ou chaque languette (12) déborde de la partie de corps (11) à un angle compris entre 10 degrés et 30 degrés par rapport à l'axe de la partie de corps (11).

11. Manchon de support selon l'une quelconque des revendications précédentes, dans lequel, dans un état brut de fabrication, la ou chaque languette (12) déborde de la partie de corps (11) de 0,5 à 1 mm, dans une direction radiale.

12. Manchon de support selon l'une quelconque des revendications précédentes, dans lequel, dans un état brut de fabrication, la composante totale de la somme de l'extension diamétrale maximale de la partie de corps établie par le débordement radial de la languette (12) ou des languettes correspond sensiblement à 1 mm.

13. Manchon de support selon l'une quelconque des revendications précédentes, dans lequel la ou chaque languette (12) comporte une partie d'extrémité distale (13) avec un profil en partie circulaire, en partie elliptique, en partie parabolique ou en partie hyperbolique.

14. Manchon de support selon l'une quelconque des revendications précédentes, dans lequel les languettes (12) sont fabriquées à partir d'un matériau élastique.

15. Manchon de support selon l'une quelconque des revendications précédentes, dans lequel ledit manchon de support (4) est fabriqué à partir d'acier inoxydable.

16. Système de raccord de tuyaux à ajustement par poussée, comprenant :
un raccord, comportant une première partie de corps (2) définissant un alésage (3) pour recevoir un tuyau (6), ledit alésage (3) comportant des moyens de préhension (8) pour retenir le tuyau (6) dans l'alésage (3) ;
un joint d'étanchéité (10) pour établir un joint d'étanchéité entre le tuyau (6) et le raccord ; et un manchon de support (4) selon l'une quelconque des revendications précédentes.
